# EUROPEAN PATENT APPLICATION

(11) **EP 4 298 883 A1**
(43) Date of publication of application: **03.01.2024**
(21) Application number: 23160484.4
(22) Date of filing: 07.03.2023
(51) Int. Cl.: A01D 34/00

(54) **SMART SCHEDULING OF OPERATION OF A ROBOTIC GARDEN TOOL**

(30) Priority: 16.03.2022 US 202263320641 P
(71) Applicant: Techtronic Cordless GP, Anderson, SC 29621 (US)
(72) Inventor: LEE, Chi Chau, Kwai Chung (HK); LEE, Hei Man, Kwai Chung (HK)
(74) Representative: Novagraaf Group

(57) **Abstract**

A communication system may include an external device and a robotic garden tool. The external device electronic processor may be configured to retrieve calendar information associated with a location that includes a lawn, and analyze, using at least one of natural language processing and word recognition, the calendar information to extract first information related to use of the lawn at one or more time periods. The external device may be further configured to generate scheduling information for the robotic garden tool based on the first information, and transmit the scheduling information to the robotic garden tool. The robotic garden tool may be configured to receive the scheduling information from the external device, and control operation of the at least one wheel motor to control movement of the robotic garden tool in accordance with the scheduling information.

## Description

### RELATED APPLICATIONS

This application claims priority to U.S. Provisional Application No. 63/320,641, filed on March 16, 2022, the entire contents of which are hereby incorporated by reference.

### FIELD

The present disclosure relates to robotic garden tools, particularly to methods and systems for scheduling operation of a robotic garden tool to move within an operating area to engage in a work task.

### SUMMARY

One embodiment includes a communication system that may include an external device and a robotic garden tool. The external device may include a display, a first network interface, and/or a first electronic processor in communication with the display and the first network interface. The first electronic processor may be configured to retrieve calendar information associated with a location that includes a lawn. The robotic garden tool may be configured to perform a task within a boundary of the lawn. The first electronic processor may be further configured to analyze, using at least one of natural language processing and word recognition, the calendar information to extract first information related to use of the lawn at one or more time periods. The first electronic processor may be further configured to generate scheduling information for the robotic garden tool based on the first information. The first electronic processor may be further configured to transmit, via the first network interface, the scheduling information to the robotic garden tool. The robotic garden tool may include a housing and/or a set of wheels coupled to the housing and configured to rotate to propel the robotic garden tool on an operating surface. The robotic garden tool may further include at least one wheel motor coupled to one or more wheels of the set of wheels. The at least one wheel motor may be configured to drive rotation of the one or more wheels. The robotic garden tool may further include a second network interface and a second electronic processor in communication with the second network interface. The second electronic processor may be configured to receive, via the second network interface, the scheduling information from the external device. The second electronic processor may be further configured to control operation of the at least one wheel motor to control movement of the robotic garden tool in accordance with the scheduling information.

In addition to any combination of features described above, the first information may include event information regarding a first event. The event information may have been entered into at least one of the external device and a second external device by a user via a user input.

In addition to any combination of features described above, the first electronic processor may be configured to generate the scheduling information based on the event information such that at least one of (i) the robotic garden tool is configured to not operate and is configured to be docked at a docking station during a first time period that corresponds with an occurrence of the first event and (ii) the robotic garden tool is configured to operate with an increased frequency during a second time period before the first time period.

In addition to any combination of features described above, the first electronic processor may be configured to control the display to display the scheduling information on the display and receive a first user input from a user. The first user input may confirm that the scheduling information should be transmitted to the robotic garden tool. The first electronic processor may be configured to transmit the scheduling information to the robotic garden tool in response to receiving the first user input.

In addition to any combination of features described above, the first electronic processor may be configured to receive a second user input from the user prior to receiving the first user input, and adjust the scheduling information based on the second user input.

In addition to any combination of features described above, the first electronic processor may be configured to retrieve the calendar information from at least one of a first memory of the external device, a second memory of a server, and a third memory of a cloud-based computing device.

In addition to any combination of features described above, the first electronic processor may be configured to retrieve weather information associated with the location that includes the lawn, and generate the scheduling information for the robotic garden tool based at last partially on the weather information.

In addition to any combination of features described above, the first electronic processor may be configured to retrieve the weather information from at least one of a remote server, a remote cloud-based computing device, a user input received by the external device, and a sensor of at least one of the robotic garden tool and a docking station of the robotic garden tool.

Another embodiment includes a method of controlling a robotic garden tool. The method may include retrieving, with a first electronic processor of an external device, calendar information associated with a location that includes a lawn. The robotic garden tool may be configured to perform a task within a boundary of the lawn. The method may further include analyzing, with the first electronic processor and using at least one of natural language processing and word recognition, the calendar information to extract first information related to use of the lawn at one or more time periods. The method may further include generating, with the first electronic processor, scheduling information for the robotic garden tool based on the first information. The method may further include transmitting, via a first network interface of the external device, the scheduling information to the robotic garden tool. The robotic garden tool may be configured to receive the scheduling information and control operation of at least one wheel motor of the robotic garden tool to control movement of the robotic garden tool in accordance with the scheduling information.

In addition to any combination of features described above, the first information may include event information regarding a first event. The event information may have been entered into at least one of the external device and a second external device by a user via a user input.

In addition to any combination of features described above, generating the scheduling information based on the event information may include generating the scheduling information based on the event information such that at least one of (i) the robotic garden tool is configured to not operate and is configured to be docked at a docking station during a first time period that corresponds with an occurrence of the first event and (ii) the robotic garden tool is configured to operate with an increased frequency during a second time period before the first time period.

In addition to any combination of features described above, the method may further include controlling, with the first electronic processor, a display of the external device to display the scheduling information on the display. The method may also further include receiving, with the first electronic processor via an input device, a first user input from a user. The first user input may confirm that the scheduling information should be transmitted to the robotic garden tool. The method may further include transmitting, via the first network interface, the scheduling information to the robotic garden tool in response to receiving the first user input.

In addition to any combination of features described above, the method may further include receiving, with the first electronic processor, a second user input from the user prior to receiving the first user input, and adjusting, with the first electronic processor, the scheduling information based on the second user input.

In addition to any combination of features described above, retrieving the calendar information may include retrieving the calendar information from at least one of a first memory of the external device, a second memory of a server, and a third memory of a cloud-based computing device.

In addition to any combination of features described above, the method may further include retrieving, with the first electronic processor, weather information associated with the location that includes the lawn, and generating, with the first electronic processor, the scheduling information for the robotic garden tool based at last partially on the weather information.

In addition to any combination of features described above, retrieving the weather information may include retrieving the weather information from at least one of a remote server, a remote cloud-based computing device, a user input received by the external device, and a sensor of at least one of the robotic garden tool and a docking station of the robotic garden tool.

Another embodiment includes an external device that may include a display, a first network interface, and/or a first electronic processor in communication with the display and the first network interface. The first electronic processor may be configured to retrieve calendar information associated with a location that includes a lawn. A robotic garden tool may be configured to perform a task within a boundary of the lawn. The first electronic processor may be further configured to analyze, using at least one of natural language processing and word recognition, the calendar information to extract first information related to use of the lawn at one or more time periods. The first electronic processor may be further configured to generate scheduling information for the robotic garden tool based on the first information. The first electronic processor may be further configured to transmit, via the first network interface, the scheduling information to the robotic garden tool. The robotic garden tool may be configured to receive the scheduling information and control operation of at least one wheel motor of the robotic garden tool to control movement of the robotic garden tool in accordance with the scheduling information.

In addition to any combination of features described above, the first information may include event information regarding a first event. The event information may have been entered into at least one of the external device and a second external device by a user via a user input. The first electronic processor may be further configured to generate the scheduling information based on the event information such that at least one of (i) the robotic garden tool is configured to not operate and is configured to be docked at a docking station during a first time period that corresponds with an occurrence of the first event and (ii) the robotic garden tool is configured to operate with an increased frequency during a second time period before the first time period.

In addition to any combination of features described above, the first electronic processor may be configured to control the display to display the scheduling information on the display and receive a first user input from a user. The first user input may confirm that the scheduling information should be transmitted to the robotic garden tool. The first electronic processor may be further configured to transmit the scheduling information to the robotic garden tool in response to receiving the first user input.

In addition to any combination of features described above, the first electronic processor may be configured to receive a second user input from the user prior to receiving the first user input, and adjust the scheduling information based on the second user input.

Other aspects of the disclosure will become apparent by consideration of the detailed description and accompanying drawings.

### BRIEF DESCRIPTION OF THE DRAWINGS

FIG. 1A illustrates a robotic garden tool, a docking station for the robotic garden tool, and an external device according to some example embodiments.
FIG. 1B illustrates a bottom perspective view of the robotic garden tool of FIG. 1A according to some example embodiments.
FIG. 2 is a block diagram of the robotic garden tool of FIGS. 1A and 1B according to some example embodiments.
FIG. 3 is a block diagram of the external device of FIG. 1A according to some example embodiments.
FIG. 4 is a block diagram of the docking station of FIG. 1A according to some example embodiments.
FIG. 5 illustrates a flowchart of a method that may be performed by a second electronic processor of the external device of FIGS. 1A and 1B to generate scheduling information for the robotic garden tool of FIGS. 1A and 1B according to some example embodiments.

### DETAILED DESCRIPTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting. The use of "including," "comprising" or "having" and variations thereof herein is meant to encompass the items listed thereafter and equivalents thereof as well as additional items. The terms "mounted," "connected" and "coupled" are used broadly and encompass both direct and indirect mounting, connecting and coupling. Further, "connected" and "coupled" are not restricted to physical or mechanical connections or couplings, and can include electrical connections or couplings, whether direct or indirect.

It should be noted that a plurality of hardware and software based devices, as well as a plurality of different structural components may be utilized to implement the invention. Furthermore, and as described in subsequent paragraphs, the specific configurations illustrated in the drawings are intended to exemplify embodiments of the invention and that other alternative configurations are possible. The terms "processor," "central processing unit," and "CPU" are interchangeable unless otherwise stated. Where the terms "processor" or "central processing unit" or "CPU" are used as identifying a unit performing specific functions, it should be understood that, unless otherwise stated, those functions can be carried out by a single processor, or multiple processors arranged in any form, including parallel processors, serial processors, tandem processors or cloud processing/cloud computing configurations.

Throughout this application, the term "approximately" may be used to describe the dimensions of various components and/or paths of travel of a robotic garden tool. In some situations, the term "approximately" means that the described dimension is within 1% of the stated value, within 5% of the stated value, within 10% of the stated value, or the like. When the term "and/or" is used in this application, it is intended to include any combination of the listed components. For example, if a component includes A and/or B, the component may include solely A, solely B, or A and B.

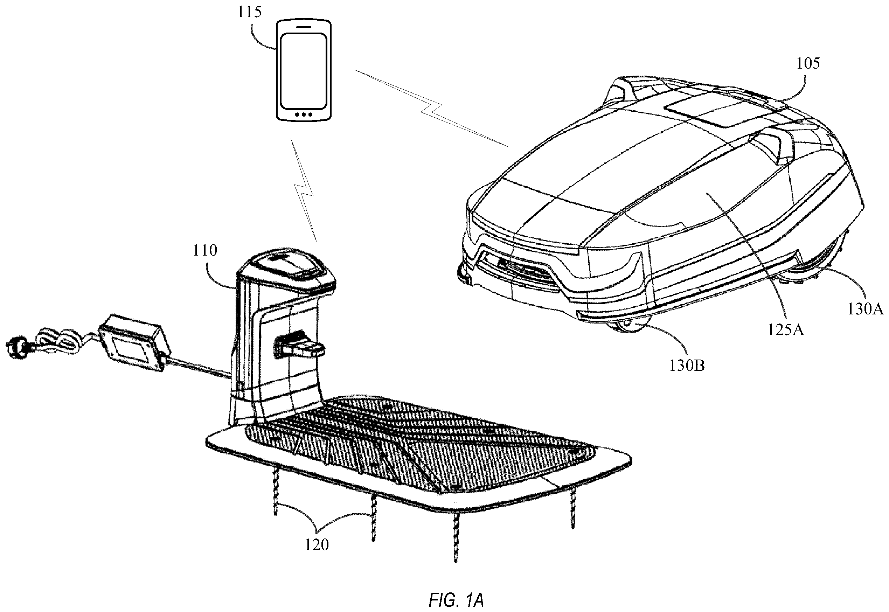

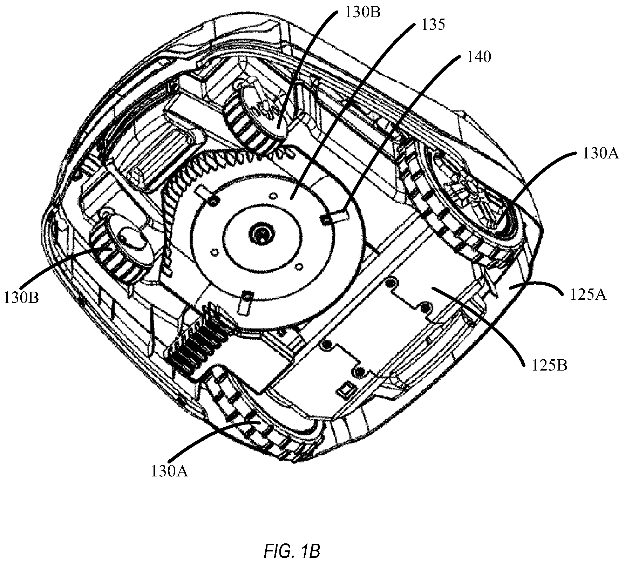

FIG. 1A illustrates a robotic garden tool 105 (e.g., a robotic lawn mower 105 that may also be referred to as a robotic mower 105), a docking station 110 for the robotic mower 105, and an external device 115 according to some example embodiments. Two or more devices 105, 110, 115 may make up a communication system in which the devices 105, 110, 115 communicate with each other as described in greater detail below. The communication system may include more or fewer devices than the amount of devices shown in FIG. 1. For example, the communication system may include additional robotic mowers 105, additional external devices 115, etc. As another example, in some instances, the docking station 110 may not be considered to be part of the communication system. In some of such instances, the communication system may merely include one or more robotic mowers 105 and one or more external devices 115. The robotic garden tool 105 is primarily described as being a robotic lawn mower 105. However, in other embodiments, the robotic garden tool 105 may include a tool for sweeping debris, vacuuming debris, clearing debris, collecting debris, moving debris, etc. Debris may include plants (such as grass, leaves, flowers, stems, weeds, twigs, branches, etc., and clippings thereof), dust, dirt, jobsite debris, snow, and/or the like. For example, other implementations of the robotic garden tool 105 may include a vacuum cleaner, a trimmer, a string trimmer, a hedge trimmer, a sweeper, a cutter, a plow, a blower, a snow blower, etc.

In some embodiments, a lawn may include any type of property that includes grass, a crop, some other material to be trimmed, cleared, gathered, etc., and/or that includes some material to receive treatment from the robotic garden tool (e.g., fertilizer to treat grass in the lawn). In some embodiments, a lawn may include paved portions of a property (e.g., a driveway), for example, when the robotic garden tool is used for snow plowing/removal. In some embodiments, use/occupation of the lawn includes human and/or animals being located on the lawn, for example, for leisure or for work purposes. Use of the lawn may additionally or alternatively include one or more devices besides the robotic garden tool 105 being used in the lawn (e.g., sprinklers to water the lawn).

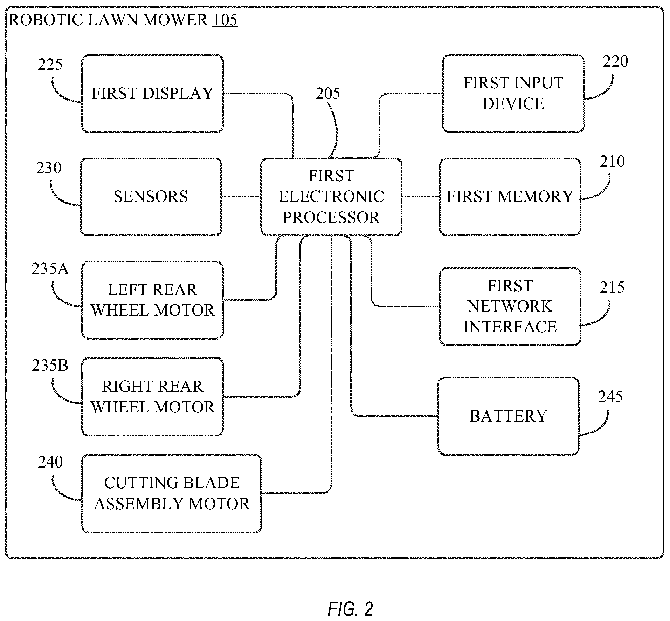

In some embodiments, the docking station 110 may be installed in a yard (i.e., a lawn) using stakes 120. The robotic mower 105 may be configured to mow the lawn and dock at the docking station 110 in order to charge a battery 245 of the robotic mower 105 (see FIG. 2). In some embodiments, the docking station 110 is configured to make an electrical connection with a power supply (e.g., via a cord and plug connected to a wall outlet that is connected to a power grid) in order to provide charging current to the robotic mower 105 when the robotic mower 105 is electrically coupled with the docking station 110.

In some embodiments, the docking station 110 may also be electrically connected to a boundary cable (i.e., boundary wire). In some embodiments, the docking station 110 provides power to the boundary cable to control the boundary cable to provide/emit, for example, an electromagnetic signal that may be detected by the robotic mower 105. In some embodiments, the boundary cable may be any cable, wire, etc. that is configured to transmit a signal and that is configured to be installed on an operating surface (e.g., a lawn including grass, a crop, or some other material to be trimmed, cleared, gathered, etc.) in a discrete and unobtrusive manner (e.g., secured at the base of the blades of grass against the ground/soil in which the grass is growing to prevent the robotic mower 105 and other people or objects from being physically obstructed by the boundary cable). For example, a plurality of pegs/stakes may be used to pin the boundary cable to the ground/soil. As another example, the boundary cable may be buried in the ground/soil underneath the grass (e.g., if the boundary cable is installed when a plot of land is being developed). In some embodiments, in response to detecting the electromagnetic signal from the boundary cable, the robotic mower 105 is configured to control its movement such that the robotic mower 105 remains within a boundary defined by the boundary cable. For example, in response to detecting the boundary cable, the robotic mower 105 may be configured to stop moving forward and turn in a random direction toward an interior of the boundary cable to begin traveling in an approximately straight line until the robotic mower 105 again detects the boundary cable.

In some embodiments, the robotic mower 105 does not operate in conjunction with a boundary cable. Rather, the robotic mower 105 may include mapping capabilities, positioning tracking capabilities, and/or the like that allow the robotic mower 105 to remain within a predefined boundary without the use of the boundary cable.

In some embodiments, the docking station 110 includes a docking cable loop, a magnet configured to be sensed by a magnetic sensor of the robotic mower 105, and/or another transmitting device configured to emit a docking signal that may be detected by the robotic mower 105. For example, the docking signal may indicate that the robotic mower 105 is near the docking station 110 and may allow the robotic mower 105 to take certain actions in response thereto to, for example, dock the robotic mower 105 at the docking station 110. In some embodiments, the docking station 110 may be configured to emit a wireless signal using an ordinary data communication protocol (e.g., WiFi^{™}, Bluetooth^{™}, Bluetooth^{™} Low Energy (BLE), and/or the like). The robotic mower 105 may receive the wireless signal from the docking station 110 when the two devices 105 and 110 are in communication range of each other.

As indicated in FIG. 1A, in some embodiments, the robotic mower 105 is configured to wirelessly communicate with the external device 115 when the two devices 105 and 115 are in communication range of each other (e.g., via Bluetooth^{™},WiFi^{™}, or the like). The external device 115 may be, for example, a smart phone (as illustrated), a laptop computer, a tablet computer, a personal digital assistant (PDA), a wireless communication router that allows another external device 115 that is located remotely from the robotic mower 105 to communicate with the robotic mower 105, or another electronic device capable of communicating with the robotic mower 105. The external device 115 may generate a user interface and allow a user to access and interact with robotic mower information. The external device 115 may receive user inputs to determine operational parameters/instructions for the robotic mower 105, enable or disable features of the robotic mower 105, and the like. In some embodiments, the communication between the external device 115 and the robotic mower 105 may be wired (e.g., via a Universal Serial Bus (USB) cord configured to connect to respective USB ports of the external device 115 and the robotic mower 105). In some embodiments, the external device 115 may also be configured to wirelessly communicate with the docking station 110 in similar manners as described above with respect to the communication between the external device 115 and the robotic mower 105. In some embodiments, the external device 115 may be configured to wirelessly communicate with other devices in similar manners or additional manners (e.g., via cellular communication). Such other devices may include external devices 115, a remote server, a remote cloud-based computing device, or the like. For example, the external device 115 may communicate with one or more of these other devices to retrieve information such as calendar information, weather information, and/or the like.

FIG. 1B illustrates a bottom perspective view of the robotic mower 105 according to some example embodiments. The robotic mower 105 may include a housing 125 that includes an outer housing 125A (i.e., outer housing shell) and an inner housing 125B. The outer housing 125A may be coupled to the inner housing 125B. The robotic mower 105 also may include wheels 130 (i.e., a set of wheels 130) coupled to the inner housing 125B and configured to rotate with respect to the housing 125 to propel the robotic mower 105 on an operating surface (e.g., a lawn to be mowed). The wheels 130 may include motor-driven wheels 130A and non-motor-driven wheels 130B. In the embodiment shown in FIG. 1B, two rear wheels 130A are motor-driven wheels 130A while two front wheels 130B are non-motor-driven wheels 130B. In other embodiments, the robotic mower 105 may include a different wheel arrangement (e.g., a different number of total wheels, a different number of each type of wheel, different wheels being motor-driven or non-motor-driven, and/or the like).

In some embodiments, the robotic mower 105 includes a wheel motor 235 (see FIG. 2) coupled to one or more wheels 130 and configured to drive rotation of the one or more wheels 130. In some embodiments, the robotic mower 105 includes multiple wheel motors 235 where each wheel motor 235 is configured to drive rotation of a respective motor-driven wheel 130A (see FIG. 2).

In some embodiments, the robotic mower 105 includes a cutting blade assembly 135 coupled to the inner housing 125B and configured to rotate with respect to the housing 125 to cut grass on the operating surface. The cutting blade assembly 135 may include a rotating disc to which a plurality of cutting blades 140 configured to cut the grass are attached. In some embodiments, the robotic mower 105 includes a cutting blade assembly motor 240 (see FIG. 2) coupled to the inner housing 125B and to the cutting blade assembly 135. The cutting blade assembly motor 240 may be configured to drive rotation of the cutting blade assembly 135 to cut the grass on the operating surface.

In some embodiments, the robotic mower 105 and/or the docking station 110 include additional components and functionality than is shown and described herein. For example, the robotic mower 105 and/or the docking station 110 may include components and/or functionality described in PCT Application No. PCT/CN2017/091129, filed June 30, 2017, which has published as International Publication No. WO 2018/001358, the entire contents of which are hereby incorporated by reference and appended herein with related replacement black-and-white line drawings filed in related U.S. Application No. 16/312,236 that claims priority to PCT Application No. PCT/CN2017/091129.

FIG. 2 is a block diagram of the robotic mower 105 according to some example embodiments. In the embodiment illustrated, the robotic mower 105 includes a first electronic processor 205 (for example, a microprocessor or other electronic device). The first electronic processor 205 includes input and output interfaces (not shown) and is electrically coupled to a first memory 210, a first network interface 215, an optional first input device 220, an optional display 225, one or more sensors 230, a left rear wheel motor 235A, a right rear wheel motor 235B, a cutting blade assembly motor 240, and a battery 245. In some embodiments, the robotic mower 105 includes fewer or additional components in configurations different from that illustrated in FIG. 2. For example, the robotic mower 105 may not include the first input device 220 and/or the first display 225. As another example, the robotic mower 105 may include a height adjustment motor configured to adjust a height of the cutting blade assembly 135 (e.g., as described in PCT Application No. PCT/CN2017/091129). As yet another example, the robotic mower 105 may include additional sensors or fewer sensors than the sensors 230 described herein. IN some embodiments, the robotic mower 105 may include a real-time clock (RTC) or other similar device to keep track of a current date and/or time. In some embodiments, the robotic mower 105 may periodically (e.g., every one second, ten second, one minutes, or the like) retrieve date and/or time information from a remote device. In some embodiments, the robotic mower 105 performs functionality other than the functionality described below.

The first memory 210 may include read only memory (ROM), random access memory (RAM), other non-transitory computer-readable media, or a combination thereof. The first electronic processor 205 is configured to receive instructions and data from the first memory 210 and execute, among other things, the instructions. In particular, the first electronic processor 205 executes instructions stored in the first memory 210 to perform the methods described herein.

The first network interface 215 may be configured to send data to and receive data from the external device 115. In some embodiments, the first network interface 215 includes one or more transceivers for wirelessly communicating with the external device 115 and/or the docking station 110 (e.g., via Bluetooth^{™},WiFi^{™}, or the like). Alternatively or in addition, the first network interface 215 may include a connector or port for receiving a wired connection to the external device 115, such as USB cable.

The first user input device 220 is configured to allow the first electronic processor 205 to receive a user input from a user to, for example, set/adjust an operational parameter of the robotic mower 105. The first display 225 is configured to display a user interface to the user. Similar to the user interface of the external device 115 described previously herein, the user interface displayed on the first display 225 may allow the user to access and interact with robotic mower information. In some embodiments, the first display 225 may also act as the first input device 220. For example, a touch sensitive input interface may be incorporated into the first display 225 to allow the user to interact with content provided on the first display 225. The first display 225 may be a liquid crystal display (LCD) screen, an organic light emitting display (OLED) display screen, or an E-ink display. In some embodiments, the first display 225 includes future-developed display technologies.

In some embodiments, the first electronic processor 205 is in communication with a plurality of sensors 230 that may include electromagnetic field sensors, radio frequency sensors (e.g., radio frequency identification (RFID) interrogators/sensors), Hall sensors, other magnetic sensors, temperature sensors, humidity sensors, ambient light sensors, moisture sensors, and/or the like. In some embodiments, the robotic mower 105 may transmit information associated with data from the sensor(s) 230 to other devices (e.g., the external device 115), for example, via the first network interface 215.

In some embodiments, the inner housing 125B includes at least two boundary cable sensors in the form of electromagnetic field sensors configured to detect an electromagnetic signal being emitted by the boundary cable. For example, the electromagnetic field sensors may be able to detect a strength and/or a polarity of the electromagnetic signal from the boundary cable.

In some embodiments, the inner housing 125B includes an odometry sensor (e.g., one or more Hall sensors or other types of sensors) for each motor-driven wheel 130A. Data from the odometry sensors may be used by the first electronic processor 205 to determine how far each wheel 130A has rotated and/or how fast each wheel 130A is rotating in order to accurately control movement (e.g., turning capabilities) of the robotic mower 105. For example, the first electronic processor 205 may control the robotic mower 105 to move in an approximately straight line by controlling both of the wheel motors 235A and 235B to rotate at approximately the same speed. As another example, the first electronic processor 205 may control the robotic mower 105 to turn and/or pivot in a certain direction by controlling one of the wheel motors 235A or 235B to rotate faster than or in an opposite direction than the other of the wheel motors 235A or 235B. Similarly, rotating only one of the wheel motors 235A or 235B while the other wheel motor 235A or 235 is not rotated should result in the robotic mower 105 turning/pivoting.

In some embodiments, the inner housing 125B includes a cutting blade assembly motor sensor (e.g., one or more Hall sensors or other types of sensors). Data from the cutting blade assembly motor sensor may be used by the first electronic processor 205 to determine how fast the cutting blade assembly 135 is rotating.

In some embodiments, the battery 245 provides power to the first electronic processor 205 and to other components of the robotic mower 105 such as the motors 235A, 235B, 240 and the first display 225. In some embodiments, power may be supplied to other components besides the first electronic processor 205 through the first electronic processor 205 or directly to the other components. In some embodiments, when power is provided directly from the battery 245 to the other components, the first electronic processor 205 may control whether power is provided to one or more of the other components using, for example, a respective switch (e.g., a field-effect transistor) or a respective switching network including multiple switches. In some embodiments, the robotic mower 105 includes active and/or passive conditioning circuitry (e.g., voltage step-down controllers, voltage converters, rectifiers, filters, etc.) to regulate or control the power received by the components of the robotic mower (e.g., the first electronic processor 205, the motors, 235A, 235B, 240, etc.) from the battery 245. In some embodiments, the battery 245 is a removable battery pack. In some embodiments, the battery 245 is configured to receive charging current from the docking station 110 when the robotic mower 105 is docked at the docking station 110 and electrically connected thereto.

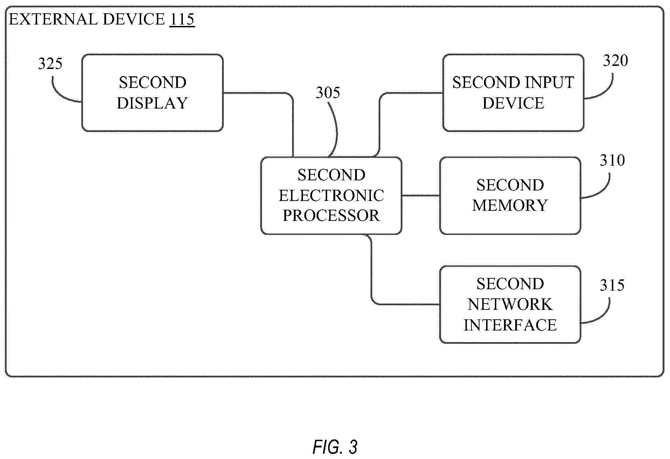

FIG. 3 is a block diagram of the external device 115 according to some example embodiments. In the example shown, the external device 115 includes a second electronic processor 305 electrically connected to a second memory 310, a second network interface 315, a second user input device 320, and a second display 325. These components are similar to the like-named components of the robotic mower 105 explained above with respect to FIG. 2 and function in a similar manner as described above. For example, the second display 325 may also function as an input device (e.g., when the second display 325 is a touchscreen). In some embodiments, the second electronic processor 305 sends data to and receives data from the robotic mower 105 via the second network interface 315. In some embodiments, the external device 115 includes fewer or additional components in configurations different from that illustrated in FIG. 3. For example, the external device 115 may include a battery, a global positioning system (GPS) device, or the like. In some embodiments, the external device 115 performs functionality other than the functionality described below.

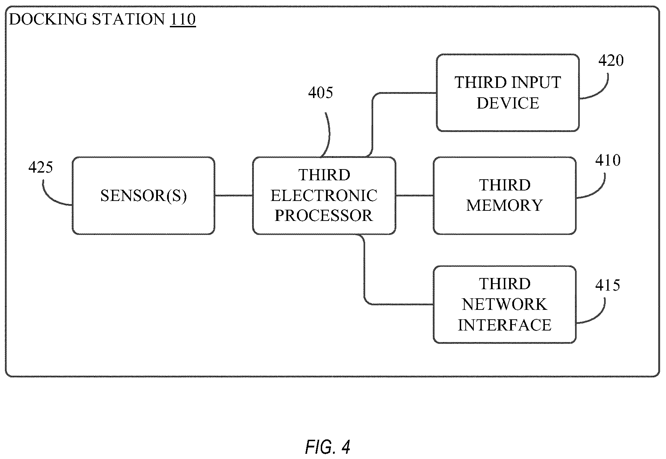

FIG. 4 is a block diagram of the docking station 110 according to some example embodiments. In the example shown, the docking station 110 includes a third electronic processor 405 electrically connected to a third memory 410, a third network interface 415, and a third user input device 420. These components are similar to the like-named components of the robotic mower 105 explained above with respect to FIG. 2 and function in a similar manner as described above. For example, the third network interface 415 may allow the third electronic processor 405 to communicate with the external device 115. In some embodiments, the third input device 420 is a button or switch that controls whether the docking station 110 is powered on/off. In some embodiments, the docking station 110 includes fewer or additional components in configurations different from that illustrated in FIG. 4. For example, the docking station 110 may include a battery, a global positioning system (GPS) device, a display, or the like. In some embodiments, the docking station 110 may include one or more sensors 425 that may be similar to at least some of the sensors 230 described previously herein. For example, the docking station 110 may include sensors such as a temperature sensor, a humidity sensor, an ambient light sensor, a moisture sensor, and/or the like. In some embodiments, the docking station 110 may transmit information associated with data from the sensor(s) 425 to other devices (e.g., the external device 115), for example, via the third network interface 415. In some embodiments, the docking station 110 performs functionality other than the functionality described below.

In some embodiments, the robotic mower 105 may travel randomly within an operating area defined by the boundary cable or defined by a virtual boundary. For example, the robotic mower 105 may be configured to travel in an approximate straight line until the robotic mower 105 detects the boundary cable or the virtual boundary. In response to detecting the boundary cable or the virtual boundary, the robotic mower 105 may be configured to turn in a random direction toward an interior of the boundary and continue traveling in an approximate straight line along a new path until the boundary cable or virtual boundary is again detected, at which point this process repeats.

In some embodiments, the first memory 210 of the robotic mower 105 may store scheduling information that indicates dates, days of the week, and/or times during each day when the robotic mower 105 should engage in operation to perform one or more tasks within an operating area (e.g., mowing a lawn). The scheduling information also may indicate when the robotic mower 105 should return to the docking station 110 during performance of a task. For example, even if the battery 245 of the robotic mower 105 has a sufficient charge level to continue operation, scheduling information stored in the first memory 210 may indicate that the robotic mower 105 should return to the docking station 110.

In some embodiments, the scheduling information stored in the first memory 210 may be initially stored and/or adjusted/updated using information wirelessly received from the external device 115. For example, the external device 115 may receive one or more user inputs from a user that establish the scheduling information for the robotic mower 105. The external device 115 may then transmit the scheduling information to the robotic mower 105 for storage in the first memory 210.

Usage plans of a lawn often change and may not be consistent from week to week or day to day. Accordingly, a user may have to frequently update the scheduling information stored on the robotic mower 105 to ensure that the robotic mower 105 is not operating at undesirable times (e.g., during a party taking place on the lawn). Such frequent updates to the scheduling information may be burdensome to the user. Additionally, a user may forget to make such updates which may result in the robotic mower 105 operating during an undesirable time.

Accordingly, there is a technological problem with respect to scheduling operation of a robotic garden tool to avoid time periods where a lawn is planned to be occupied/used and/or is likely to be occupied/used. The systems, devices, and methods described herein address the above-noted technological problem by analyzing calendar information associated with a lawn and adjusting scheduling information based on extracted events that may involve use of the lawn. Embodiments described herein aim to prevent operation of the robotic garden tool during undesirable times. Additionally, embodiments described herein aim to ensure that the lawn has been manicured in preparation for anticipated use of the lawn. Furthermore, embodiments described herein remove the burden from users of having to remember to frequently adjust scheduling information of their robotic garden tool.

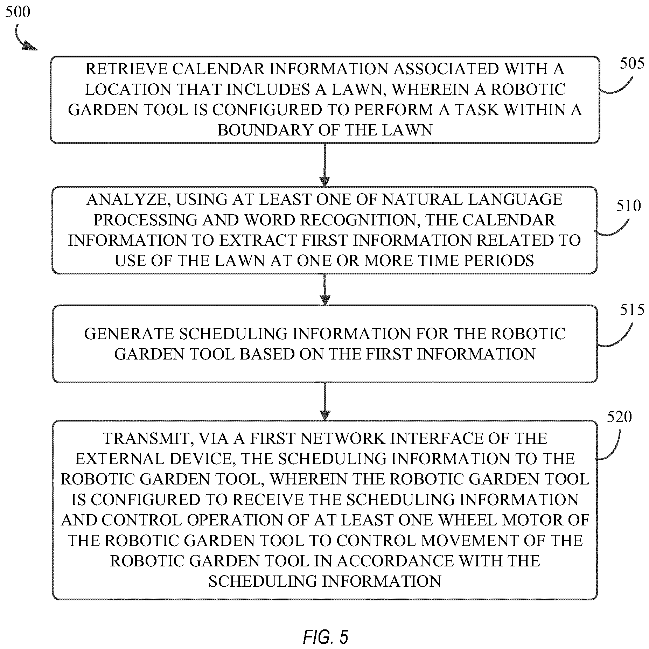

FIG. 5 illustrates a flowchart of a method 500 that may be performed by the second electronic processor 305 of the external device 115 to generate scheduling information for the robotic mower 105 according to some example embodiments. While a particular order of processing steps, signal receptions, and/or signal transmissions is indicated in FIG. 5 as an example, timing and ordering of such steps, receptions, and transmissions may vary where appropriate without negating the purpose and advantages of the examples set forth in detail throughout the remainder of this disclosure.

At block 505, the second electronic processor 305 may retrieve calendar information associated with a location that includes a lawn. In some embodiments, the robotic mower 105 is configured to perform a task within a boundary of the lawn (e.g., mowing, blowing, plowing, etc.). The location may include a property or parcel of land that includes the lawn. The location may also include one or more buildings such as a house, office building, etc. In some embodiments, the calendar information includes calendar information of an individual owner of personal real estate located at the location. In some embodiments, the calendar information includes calendar information of a company that owns or rents real estate at the location.

In some embodiments, the calendar information is retrieved from at least one of a second memory 310 of the external device 115 (i.e., a local memory), a memory of a remotely located server, and a memory of a remotely located cloud-based computing device. In some embodiments, the calendar information includes information that was entered by a user into the external device 115 and/or a second external device 115 and then stored in one or more of the memories mentioned above. For example, the calendar information may include event information regarding a first event that indicates at least one of a name of the first event, a general and/or specific location of the first event, a date and a time period of the first event, etc. As a more specific example, the first event may be a backyard barbeque party, a company picnic, a soccer practice, and/or the like. In some embodiments, the general location indicates whether the event will take place at the property or away from the property. In some embodiments, the specific location indicates where the event will take place within the property (e.g., back yard, front yard, indoors, living room, basement, etc.).

At block 510, the second electronic processor 305 may analyze the calendar information to extract first information related to use of the lawn at one or more time periods. The first information related to use of the lawn at one or more time periods may indicate events that are explicitly planned to use the lawn and/or events that have a probability (e.g., a high or low probability) of using the lawn. In some embodiments, the second electronic processor 305 may analyze the calendar information using at least one of natural language processing and word recognition. For example, the second electronic processor 305 may use word recognition to determine the names of events in the calendar information that are likely to be associated with use of the lawn (e.g., barbeque, grill, picnic, practice, words involving sports or the outdoors, and/or the like). As another example, the second electronic processor 305 may use word recognition to determine that a specific location of an event is explicitly listed as being in the lawn (e.g., back yard, front yard, etc.).

In some embodiments, the second electronic processor 305 may be configured to use at least one of natural language processing and word recognition of calendar information in combination with other information (e.g., predicted weather information) to determine that a scheduled event is likely or unlikely to be associated with use of the lawn. For example, calendar information associated with an event may not clearly indicate whether the event will occur at least partially in the lawn or completely indoors (e.g., an event titled "Bob's Birthday" that does not have specific location information). However, the second electronic processor 305 may be able to determine based on a date, time, and/or general location information that the event is unlikely to involve use of the lawn. For example, the event may be unlikely to involve use of the lawn when the location is in cold weather environment and the event is scheduled when the predicted temperature is less than forty degrees Fahrenheit, less than zero degrees Fahrenheit, or the like. As another example, the event may be unlikely to involve occupation/use of the lawn when the event is scheduled when the predicted weather indicates that it is likely to rain.

In some embodiments, the first information extracted from the calendar information includes event information regarding the first event that was entered into at least one of the external device 115 and a second external device 115 by a user via a user input. In some embodiments, the first information extracted from the calendar information includes event information regarding a plurality of events, each of which includes some type of information that indicates that the event is likely or unlikely to be associated with use of the lawn. For the sake of brevity, a single first event may be referenced herein.

In some embodiments, in response to identifying event information in general and/or event information that indicates that the event is likely or unlikely to be associated with use of the lawn, the second electronic processor 305 may be configured to extract timing information that indicates one or more time periods associated with the event. In other words, the extracted first information may include timing information with respect to a scheduled event. For example, the timing information may include a time period that corresponds with an occurrence of the event (e.g., a time period during which the event is scheduled to take place), a time period that indicates a preparation time planned to prepare for the event (e.g., a time period immediately before the event), and/or a time period that indicates a post-event time planned to clean up after the event (e.g., a time period immediately after the event).

At block 515, the second electronic processor 305 may generate scheduling information for the robotic mower 105 based on the first information that was extracted from the calendar information.

In some embodiments, the second electronic processor 305 is configured to generate the scheduling information based on event information regarding a first event such that the robotic mower 105 is configured to not operate and is configured to be docked at the docking station 110 during a first time period that corresponds with an occurrence of the first event. In some embodiments, the first time period may be longer than a time period during which the first event is scheduled to take place in order to leave some buffer time of non-operation of the robotic mower 105 in case the first event starts earlier than planned or ends later than planned.

In some embodiments, the second electronic processor 305 is configured to generate the scheduling information based on event information regarding a first event such that the robotic mower 105 is configured to operate with an increased frequency during a second time period before the first time period that corresponds with an occurrence of the first event. For example, in response to determining that the first event (e.g., an outdoor event in the lawn) is scheduled for Saturday, March 8, the second electronic processor 305 may generate the scheduling information such that the robotic mower 105 is scheduled to operate more frequently that it was previously scheduled to operate on Friday, March 7 to attempt to make sure that the lawn is in good condition for the first event on Saturday, March 8. In some embodiments, the second time period may be configured to be a predetermined period of time or number of days prior to the first event (e.g., to attempt to prevent the lawn from having fresh grass clippings during the first event).

In some embodiments, the second electronic processor 305 is configured to generate the scheduling information based on a determination that a scheduled event is unlikely to be associated with use of the lawn. For example, when the first event is named "Movie Day" and a specific location of "Theatre Room" is included in the extracted calendar information, the second electronic processor 305 may generate the scheduling information such that the robotic mower 105 is scheduled to operate during the first event since the user is unlikely to be using the lawn during a time period of the first event.

In some embodiments, if the second electronic processor 305 is unable to determine whether it is likely or unlikely that a user will be using the lawn during a given event, the second electronic processor 305 may default the scheduling information to not operate the robotic mower 105 during a time period associated with the given event. In some embodiments, the second electronic processor 305 may provide an output (e.g., on the second display 325) to prompt the user to indicate whether the lawn is likely to be used during the given event so that the second electronic processor 305 can generate scheduling information accordingly. In some embodiments, based on the user input received in response to the output, the second electronic processor 305 may determine that future similarly-named events and/or similar-located events have the same likelihood of the lawn being used. For example, when the user input indicates that an event named "Basketball" is unlikely to involve use of the lawn, the second electronic processor 305 may determine that future event information with the word "basketball" in the name of the event is unlikely to involve use of the lawn.

In some embodiments, the second electronic processor 305 is configured to retrieve weather information associated with the location that includes the lawn, and generate the scheduling information for the robotic mower 105 based at least partially on the weather information. In some embodiments, the weather information includes at least one of temperature information, humidity information, ambient light information (e.g., sunlight/brightness information), moisture information (e.g., whether it is raining), season information (e.g., expected weather characteristics given the time of year), and the like. In some embodiments, the weather information is current weather information that indicates current weather conditions at the location of the lawn. In some embodiments, the weather information is future/predicted weather information that indicates predicted weather conditions at the location of the lawn. In some embodiments, the second electronic processor 305 is configured to retrieve the weather information from at least one of a remote server, a remote cloud-based computing device, a user input received by the external device 115, and a sensor 230, 425 of at least one of the robotic mower 105 and the docking station 110.

In some embodiments, the second electronic processor 305 is configured to generate the scheduling information for the robotic mower 105 based on the weather information without using the calendar information. For example, in response to determining that the predicted weather information indicates that it will be raining during a time period, the second electronic processor 305 may generate scheduling information that prevents operation of the robotic mower 105 during the time period.

In some embodiments, the second electronic processor 305 is configured to generate the scheduling information for the robotic mower 105 based on the weather information in combination with the calendar information. Continuing the above example regarding "Bob's Birthday" event that does not have specific location information, the second electronic processor 305 may be configured to generate scheduling information that prevents operation of the robotic mower 105 during a time period corresponding to "Bob's Birthday" event when the predicted temperature is greater than or equal to a temperature threshold (e.g., sixty degrees) because it may be more likely that the lawn will be used on a warm day than a cold day. Conversely, the second electronic processor 305 may be configured to generate scheduling information that allows operation of the robotic mower 105 during the time period that corresponds to "Bob's Birthday" event when the predicted temperature is below the temperature threshold. The temperature threshold may be adjusted (e.g., by a user input) and may be indicative of whether it is likely that the lawn will be used during an event. In some embodiments, the second electronic processor 305 may take into account additional and/or alternative weather characteristics and thresholds. For example, high humidity may be indicative of a lower probability of the lawn being used compared to lower humidity.

At block 520, the second electronic processor 305 may transmit, via the second network interface 315, the scheduling information to the robotic mower 105. In some embodiments, the robotic mower 105 is configured to receive the scheduling information from the external device 115 and control operation of at least one wheel motor 235 of the robotic mower 105 to control movement of the robotic mower 105 in accordance with the scheduling information. In other words, the robotic mower 105 is configured to control itself to operate or not operate (i.e., remain at or return to the docking station 110) during certain time periods in accordance with the scheduling information.

In some embodiments, the second electronic processor 305 is configured to control the second display 325 to display the scheduling information on the second display 325, for example, in response to generating the scheduling information. The second electronic processor 305 may receive a first user input from a user that confirms that the scheduling information should be transmitted to the robotic mower 105. The second electronic processor 305 may then transmit the scheduling information to the robotic mower 105 in response to receiving the first user input.

In some embodiments, the second electronic processor 305 is configured to (i) receive a second user input from the user prior to receiving the first user input, and (ii) adjust the scheduling information based on the second user input. In other words, the external device 115 may allow the user to adjust generated scheduling information before the scheduling information is transmitted to the robotic mower 105.

In some embodiments, the external device 115 may transmit the scheduling information to the robotic mower 105 in response to generating the scheduling information and without prompting the user for approval. In some embodiments, the method 500 may repeat such that the second electronic processor 305 generates updated scheduling information based on newly-added or updated calendar information.

The embodiments described above and illustrated in the figures are presented by way of example only and are not intended as a limitation upon the concepts and principles of the present invention. As such, it will be appreciated that various changes in the elements and their configuration and arrangement are possible without departing from the spirit and scope of the present invention.

## Claims

1. A communication system comprising:
an external device including
a display,
a first network interface, and
a first electronic processor in communication with the display and the first network interface, the first electronic processor configured to
retrieve calendar information associated with a location that includes a lawn, wherein a robotic garden tool is configured to perform a task within a boundary of the lawn,
analyze, using at least one of natural language processing and word recognition, the calendar information to extract first information related to use of the lawn at one or more time periods,
generate scheduling information for the robotic garden tool based on the first information, and
transmit, via the first network interface, the scheduling information to
the robotic garden tool; and
the robotic garden tool including
a housing,
a set of wheels coupled to the housing and configured to rotate to propel the robotic garden tool on an operating surface,
at least one wheel motor coupled to one or more wheels of the set of wheels, the at least one wheel motor configured to drive rotation of the one or more wheels,
a second network interface,
a second electronic processor in communication with the second network interface and configured to
receive, via the second network interface, the scheduling information from the external device, and
control operation of the at least one wheel motor to control movement of the robotic garden tool in accordance with the scheduling information.

2. The robotic garden tool of claim 1, wherein the first information includes event information regarding a first event, wherein the event information was entered into at least one of the external device and a second external device by a user via a user input.

3. The robotic garden tool of claim 2, wherein the first electronic processor is configured to generate the scheduling information based on the event information such that at least one of:
the robotic garden tool is configured to not operate and is configured to be docked at a docking station during a first time period that corresponds with an occurrence of the first event; and
the robotic garden tool is configured to operate with an increased frequency during a second time period before the first time period.

4. The robotic garden tool of claim 1, wherein the first electronic processor is configured to:
control the display to display the scheduling information on the display;
receive a first user input from a user, wherein the first user input confirms that the scheduling information should be transmitted to the robotic garden tool; and
transmit the scheduling information to the robotic garden tool in response to receiving the first user input.

5. The robotic garden tool of claim 4, wherein the first electronic processor is configured to:
receive a second user input from the user prior to receiving the first user input; and
adjust the scheduling information based on the second user input.

6. The robotic garden tool of claim 1, wherein the first electronic processor is configured to retrieve the calendar information from at least one of a first memory of the external device, a second memory of a server, and a third memory of a cloud-based computing device.

7. The robotic garden tool of claim 1, wherein the first electronic processor is configured to:
retrieve weather information associated with the location that includes the lawn; and
generate the scheduling information for the robotic garden tool based at last partially on the weather information.

8. The robotic garden tool of claim 7, wherein the first electronic processor is configured to retrieve the weather information from at least one of a remote server, a remote cloud-based computing device, a user input received by the external device, and a sensor of at least one of the robotic garden tool and a docking station of the robotic garden tool.

9. A method of controlling a robotic garden tool, the method comprising:
retrieving, with a first electronic processor of an external device, calendar information associated with a location that includes a lawn, wherein the robotic garden tool is configured to perform a task within a boundary of the lawn;
analyzing, with the first electronic processor and using at least one of natural language processing and word recognition, the calendar information to extract first information related to use of the lawn at one or more time periods;
generating, with the first electronic processor, scheduling information for the robotic garden tool based on the first information; and
transmitting, via a first network interface of the external device, the scheduling information to the robotic garden tool, wherein the robotic garden tool is configured to receive the scheduling information and control operation of at least one wheel motor of the robotic garden tool to control movement of the robotic garden tool in accordance with the scheduling information.

10. The method of claim 9, wherein the first information includes event information regarding a first event, wherein the event information was entered into at least one of the external device and a second external device by a user via a user input.

11. The method of claim 10, wherein generating the scheduling information based on the event information includes generating the scheduling information based on the event information such that at least one of:
the robotic garden tool is configured to not operate and is configured to be docked at a docking station during a first time period that corresponds with an occurrence of the first event; and
the robotic garden tool is configured to operate with an increased frequency during a second time period before the first time period.

12. The method of claim 9, further comprising:
controlling, with the first electronic processor, a display of the external device to display the scheduling information on the display;
receiving, with the first electronic processor via an input device, a first user input from a user, wherein the first user input confirms that the scheduling information should be transmitted to the robotic garden tool; and
transmitting, via the first network interface, the scheduling information to the robotic garden tool in response to receiving the first user input;
and optionally further comprising:
receiving, with the first electronic processor, a second user input from the user prior to receiving the first user input; and
adjusting, with the first electronic processor, the scheduling information based on the second user input.

13. The method of claim 9, wherein retrieving the calendar information includes retrieving the calendar information from at least one of a first memory of the external device, a second memory of a server, and a third memory of a cloud-based computing device.

14. The method of claim 9, further comprising:
retrieving, with the first electronic processor, weather information associated with the location that includes the lawn; and
generating, with the first electronic processor, the scheduling information for the robotic garden tool based at last partially on the weather information;
and optionally wherein retrieving the weather information includes retrieving the weather information from at least one of a remote server, a remote cloud-based computing device, a user input received by the external device, and a sensor of at least one of the robotic garden tool and a docking station of the robotic garden tool.

15. An external device comprising:
a display,
a first network interface, and
a first electronic processor in communication with the display and the first network interface, the first electronic processor configured to
retrieve calendar information associated with a location that includes a lawn, wherein a robotic garden tool is configured to perform a task within a boundary of the lawn,
analyze, using at least one of natural language processing and word recognition, the calendar information to extract first information related to use of the lawn at one or more time periods,
generate scheduling information for the robotic garden tool based on the first information, and
transmit, via the first network interface, the scheduling information to the robotic garden tool, wherein the robotic garden tool is configured to receive the scheduling information and control operation of at least one wheel motor of the robotic garden tool to control movement of the robotic garden tool in accordance with the scheduling information;
and optionally
wherein the first information includes event information regarding a first event, wherein the event information was entered into at least one of the external device and a second external device by a user via a user input; and
wherein the first electronic processor is configured to generate the scheduling information based on the event information such that at least one of:
the robotic garden tool is configured to not operate and is configured to be docked at a docking station during a first time period that corresponds with an occurrence of the first event; and
the robotic garden tool is configured to operate with an increased
frequency during a second time period before the first time period;
and optionally wherein the first electronic processor is configured to:
control the display to display the scheduling information on the display;
receive a first user input from a user, wherein the first user input confirms that the scheduling information should be transmitted to the robotic garden tool; and
transmit the scheduling information to the robotic garden tool in response to receiving the first user input;
and further optionally wherein the first electronic processor is configured to:
receive a second user input from the user prior to receiving the first user input; and
adjust the scheduling information based on the second user input.
